# FASCICULE DE BREVET EUROPEEN

(11) **EP 4 217 252 B1**
(45) Date de publication et mention de la délivrance du brevet: **11.09.2024**
(21) Numéro de dépôt: 21752079.0
(22) Date de dépôt: 20.07.2021
(51) Int. Cl.: B62D 21/11

(54) **BERCEAU COMPORTANT UNE ENTRETOISE A MONTAGE SIMPLIFIE**
WIEGE MIT LEICHT MONTIERBAREM ABSTANDHALTER
CRADLE COMPRISING AN EASILY MOUNTABLE SPACER

(30) Priorité: 25.09.2020 FR 2009770
(43) Date de publication de la demande: 02.08.2023
(73) Titulaire: Stellantis Auto SAS, 78300 Poissy (FR)
(72) Inventeur: GALMICHE, Jean Pierre, 25490 DAMPIERRE LES BOIS (FR); LE GUILLOU, Olivier, 25200 MONTBELIARD (FR); KONDRATOFF, Axel, 25150 DAMBELIN (FR)
(86) Numéro de dépôt international: PCT/FR2021/051351
(87) Numéro de publication internationale: WO 2022/064115

(56) Documents cités:
- EP-A1- 3 434 562
- EP-B1- 2 902 303
- US-B2- 10 239 560

## Description

La présente invention revendique la priorité de la demande française N°2009770 déposée le 25.09.2020.

La présente invention concerne un berceau de véhicule et un véhicule comportant un tel berceau.

La présente invention concerne plus particulièrement un tel berceau qui comporte une coque inférieure, une coque supérieure et une entretoise, la coque inférieure étant solidarisée à la coque supérieure en délimitant un espace creux dans lequel est positionnée ladite entretoise en appui entre lesdites deux coques, ledit berceau étant adapté pour, à l'emplacement de l'entretoise, former un support pour des éléments de suspension, des éléments de fixation d'un moteur ou des éléments de commande de direction.

Un tel berceau est divulgué dans le document EP-B1-2902303 avec une entretoise qui est fixée aux deux coques par des soudures circulaires à chacune de ces deux extrémités.

De telles soudures circulaires entre chacune des deux coques et chacune des deux extrémités de chaque entretoise sont difficiles à réaliser, présentent un surcout important et imposant souvent de créer des puits dans les deux coques pour masquer ces soudures.

Il apparait aussi un phénomène de fatigue de ces soudures dans le temps dû à un manque de maintien de la partie centrale des entretoises, risquant de cisailler les soudures.

Le dispositif selon l'invention permet de remédier à cet inconvénient.

Il comporte en effet selon une première caractéristique un berceau de véhicule qui comporte une coque inférieure, une coque supérieure et une entretoise, la coque inférieure étant solidarisée à la coque supérieure en délimitant un espace creux dans lequel est positionnée ladite entretoise en appui entre lesdites deux coques, ledit berceau étant adapté pour, à l'emplacement de l'entretoise, former un support pour des éléments de suspension, des éléments de fixation d'un moteur ou des éléments de commande de direction, tel qu'un élément de maintien est positionné dans ledit espace creux, ledit élément de maintien étant solidarisé à une des deux coques et comporte une ouverture dans laquelle est positionnée ladite entretoise.

Selon une deuxième caractéristique de l'invention, la partie de l'élément de maintien dans laquelle est formée ladite ouverture est écartée de la coque inférieure d'au moins 1/3 de la hauteur de l'entretoise.

Selon une troisième caractéristique de l'invention, l'élément de maintien est formé par une plaque en tôle.

Selon une quatrième caractéristique de l'invention, l'élément de maintien est solidarisé à une des deux coques par des points de soudure.

Selon une cinquième caractéristique de l'invention, les deux coques comportent, à l'emplacement de l'entretoise, des ouvertures alignées avec une ouverture formée dans l'entretoise pour le passage d'une vis.

Selon une sixième caractéristique de l'invention, le berceau comporte au moins deux entretoises positionnées d'un même côté dudit berceau, l'élément de maintien comportant au moins deux ouvertures dans lesquelles sont positionnées respectivement lesdites au moins deux entretoises.

La présente invention concerne aussi un véhicule qui comporte un tel berceau.

Les dessins annexés illustrent l'invention :

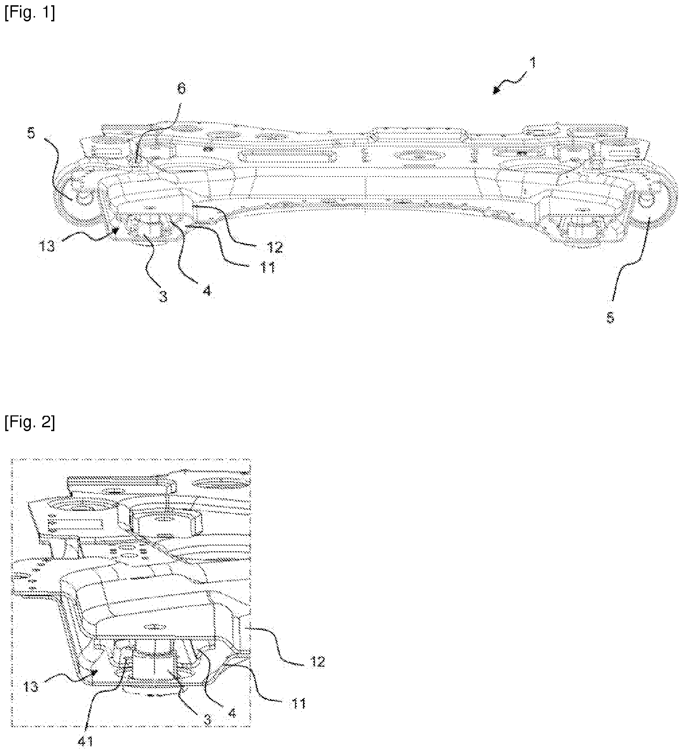

[Fig.1] représente une vue en perceptive d'un berceau selon l'invention, comportant des éléments de suspension.
[Fig.2] représente une vue partielle du berceau seul selon l'invention.

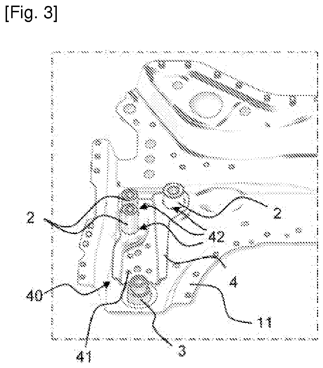

[Fig.3] représente une vue partielle du berceau seul selon l'invention sans sa coque supérieure.

En référence à ces dessins, un berceau 1 d'un véhicule comporte une coque inférieure 11 et une coque supérieure 12 délimitant un espace creux 13.

Dans l'espace creux 13 est positionné des entretoises 2 qui permettent de rigidifier les deux coques pour fixer sur le berceau 1 des éléments de suspension, des éléments de fixation d'un moteur ou des éléments de commande de direction.

La coque inférieure 11 comporte un élément de renfort 3, en particulier une douille, qui est soudée sur la coque inférieure 11 et qui permet de solidariser le berceau 1 à la structure du véhicule.

Dans l'espace creux 13 est aussi positionné un élément de maintien 4 qui peut aussi forme un renfort pour rigidifier le berceau 1 en cas de choc et cela en fonction de l'épaisseur de l'élément de maintien 4 utilisé.

L'élément de maintien 4 est formé par une plaque en tôle obtenue par un procédé d'emboutissage.

Une extrémité 40 de la plaque de tôle 4 est solidarisée à la coque inférieure 11 au moyen de points de soudures 41, la plaque de tôle 4 s'écarte ensuite de la coque inférieure 11 à l'approche des entretoises 2 pour former un support aux entretoises 2, les maintenant en position lors de l'assemblage du berceau 1 et lors du montage des éléments de suspension 5 ou des éléments de commande de direction sur le berceau 1.

Pour ce faire, la plaque en tôle 4 s'écarte de la coque inférieure 11 d'au moins 1/3 de la hauteur de l'entretoise 2 et comporte des ouvertures 42 dans lesquelles sont positionnées les entretoises 2.

Trois ouvertures sont formées dans la coque supérieure 11 en correspondance avec des ouvertures formées dans chacune des trois entretoises 2 et sont en correspondance avec trois ouvertures formées dans la coque inférieure 12, permettant le passage de trois vis 6 pour fixer le triangle inférieur de suspension 5 et la crémaillère de direction au berceau 1.

Du fait de la présence de la tôle 4, les deux extrémités des entretoises 2 n'ont pas besoin d'être soudées aux deux coques et un tel maintient le long des entretoises 2 élimine les problèmes de fatigue pouvant se produire au niveau des soudures entre les entretoises et les deux coques suivant un mode de réalisation tel que connu de l'état de la technique.

L'absence de soudures aux deux extrémités des entretoise 2 avec les coques inférieure 11 et supérieure 12, permet aussi de simplifier la forme des deux coques à l'emplacement des entretoises 2 où à présent de simples ouvertures sur chacune des deux coques suffit sans avoir à former des puits pour masquer les soudures.

## Revendications

1. Berceau (1) de véhicule qui comporte une coque inférieure (11), une coque supérieure (12) et une entretoise (2), la coque inférieure (11) étant solidarisée à la coque supérieure (12) en délimitant un espace creux (13) dans lequel est positionnée ladite entretoise (2) en appui entre lesdites deux coques (11, 12), ledit berceau (1) étant adapté pour, à l'emplacement de l'entretoise (2), former un support pour des éléments de suspension (5), des éléments de fixation d'un moteur ou des éléments de commande de direction, **caractérisé en ce qu'**un élément de maintien (4) est positionné dans ledit espace creux (13), ledit élément de maintien (4) étant solidarisé à une des deux coques (11, 12) et comporte une ouverture (42) dans laquelle est positionnée ladite entretoise (2).

2. Berceau (1) selon la revendication 1, **caractérisé en ce que** la partie de l'élément de maintien (4) dans laquelle est formée ladite ouverture (42) est écartée de la coque inférieure (11) d'au moins 1/3 de la hauteur de l'entretoise (2).

3. Berceau (1) selon la revendication 1 ou 2, **caractérisé en ce que** l'élément de maintien (4) est formé par une plaque en tôle.

4. Berceau (1) selon l'une quelconque des revendications précédentes, **caractérisé en ce que** l'élément de maintien (4) est solidarisé à une des deux coques (11, 12) par des points de soudure (41).

5. Berceau (1) selon l'une quelconque des revendications précédentes, **caractérisé en ce que** les deux coques (11, 12) comportent, à l'emplacement de l'entretoise (2), des ouvertures alignées avec une ouverture formée dans l'entretoise (2) pour le passage d'une vis (5).

6. Berceau (1) selon l'une quelconque des revendications précédentes, **caractérisé en ce que** le berceau (1) comporte au moins deux entretoises (2) positionnées d'un même côté dudit berceau (1), l'élément de maintien (4) comportant au moins deux ouvertures (42) dans lesquelles sont positionnées respectivement lesdites au moins deux entretoises (2).

7. Véhicule comportant un berceau (1) selon l'une quelconque des revendications précédentes.

## Patentansprüche

1. Fahrzeugträger (1), der eine untere Schale (11), eine obere Schale (12) und eine Strebe (2) aufweist, wobei die untere Schale (11) mit der oberen Schale (12) fest verbunden ist, indem sie einen Hohlraum (13) begrenzt, in dem die Strebe (2) in Anlage zwischen den beiden Schalen (11, 12) angeordnet ist, wobei die Strebe (1) geeignet ist, an der Stelle der Strebe (2) einen Träger für Aufhängungselemente (5), Motorbefestigungselemente oder Steuerelemente zu bilden , **dadurch gekennzeichnet, dass** ein Halteelement (4) in dem Hohlraum (13) angeordnet ist, wobei das Halteelement (4) mit einer der beiden Schalen (11, 12) fest verbunden ist und eine Öffnung (42) aufweist, in der der Abstandshalter (2) angeordnet ist.

2. Wiege (1) nach Anspruch 1, **dadurch gekennzeichnet, dass** der Teil des Halteelements (4), in dem die Öffnung (42) ausgebildet ist, von der unteren Schale (11) um mindestens 1/3 der Höhe des Abstandshalters (2) beabstandet ist.

3. Wiege (1) nach Anspruch 1 oder 2, **dadurch gekennzeichnet, dass** das Halteelement (4) durch eine Blechplatte gebildet ist.

4. Wiege (1) nach einem der vorhergehenden Ansprüche, **dadurch gekennzeichnet, dass** das Halteelement (4) mit einer der beiden Schalen (11, 12) durch Schweißpunkte (41) fest verbunden ist.

5. Wiege (1) nach einem der vorhergehenden Ansprüche, **dadurch gekennzeichnet, dass** die beiden Schalen (11, 12) an der Stelle des Stegs (2) mit einer in dem Steg (2) gebildeten Öffnung fluchtende Öffnungen für den Durchgang einer Schraube (5) aufweisen.

6. Wiege (1) nach einem der vorhergehenden Ansprüche, **dadurch gekennzeichnet, dass** die Wiege (1) mindestens zwei Streben (2) aufweist, die auf einer gleichen Seite der Wiege (1) angeordnet sind, wobei das Halteelement (4) mindestens zwei Öffnungen (42) aufweist, in denen jeweils die mindestens zwei Streben (2) angeordnet sind.

7. Fahrzeug mit einem Gestell (1) nach einem der vorhergehenden Ansprüche.

## Claims

1. A vehicle cradle (1) which comprises a lower shell (11), an upper shell (12) and a spacer (2), the lower shell (11) being secured to the upper shell (12) by delimiting a hollow space (13) in which said spacer (2) is positioned in abutment between said two shells (11, 12), said cradle (1) being adapted to, at the location of the spacer (2), form a support for suspension elements (5), fixing elements of an engine or steering control elements, **characterized in that** a holding element (4) is positioned in said hollow space (13), said holding element (4) being secured to one of the two shells (11, 12) and comprises an opening (42) in which said spacer (2) is positioned.

2. Cradle (1) according to claim 1, **characterized in that** the part of the holding element (4) in which the said opening (42) is formed is separated from the lower shell (11) by at least 1/3 of the height of the spacer (2).

3. Cradle (1) according to claim 1 or 2, **characterized in that** the holding element (4) is formed by a sheet metal plate.

4. Cradle (1) according to any one of the preceding claims, **characterized in that** the holding element (4) is secured to one of the two shells (11, 12) by welding spots (41).

5. Cradle (1) according to any one of the preceding claims, **characterized in that** the two shells (11, 12) comprise, at the location of the spacer (2), openings aligned with an opening formed in the spacer (2) for the passage of a screw (5).

6. Cradle (1) according to any one of the preceding claims, **characterized in that** the cradle (1) comprises at least two spacers (2) positioned on the same side of said cradle (1), the holding element (4) comprising at least two openings (42) in which are positioned respectively said at least two spacers (2).

7. Vehicle comprising a cradle (1) according to any one of the preceding claims.
